Europäisches Patentamt

European Patent Office

Office européen des brevets

(11) Veröffentlichungsnummer: **0 228 101**
**A2**

# (12) EUROPÄISCHE PATENTANMELDUNG

(21) Anmeldenummer: **86201888.4**

(22) Anmeldetag: **28.10.86**

(51) Int. Cl.4: **H04B 17/02**

(30) Priorität: **25.11.85 CH 5024/85**

(43) Veröffentlichungstag der Anmeldung:
**08.07.87 Patentblatt 87/28**

(84) Benannte Vertragsstaaten:
**CH DE FR GB LI SE**

(71) Anmelder: **Hasler AG**
**Belpstrasse 23**
**CH-3000 Bern 14(CH)**

(72) Erfinder: **Kohler, Roland**
**Bodenacker 17**
**CH-3033 Wohlen(CH)**
Erfinder: **Gutmann, Heinz**
**Hauptstrasse 48**
**CH-2557 Studen b. Brügg(CH)**

(74) Vertreter: **Schwerdtel, Eberhard, Dr.**
**c/o Hasler AG Belpstrasse 23**
**CH-3000 Bern 14(CH)**

(54) **Verfahren zur Ueberwachung einer Mehrzahl digitaler Uebertragungsleitungen und Anordnung zur Ausführung des Verfahrens.**

(57) Jede Übertragungsleitung (14) wird in jeder Zwischenstelle (15) durch einen Fehlerüberwacher (29, 29') laufend auf Codeverletzungen überwacht. Die Information über die festgestellten Verletzungen wird gespeichert. Parallel zu den Übertragungsleitungen verläuft eine gerichtete Datenleitung (38), auf der laufend ein Bit-und Rahmenmuster in Richtung zur Überwachungsstelle (48) läuft. Aufgrund einer zyklischen Adressierung der Rahmen werden nacheinander und periodisch alle Fehlerüberwacher (29, 29') abgefragt, wieviel Codeverletzungen sie im jeweiligen Messintervall festgestellt haben. Diese Information wird in den jeweiligen Rahmen übernommen und zur Überwachungsstelle (48) übertragen. Die Überwachungsstelle erhält damit ständig Daten, die sie über die Fehlersituation auf allen Leitungen (14) laufend informiert.

Fig. 1

## Verfahren zur Überwachung einer Mehrzahl digitaler Übertragungsleitungen und Anordnung zur Ausführung des Verfahrens

Die Erfindung betrifft ein Verfahren zur Überwachung einer Mehrzahl digitaler Übertragungsleitungen entsprechend dem Oberbegriff von Anspruch 1. Unter digitalen Übertragungsleitungen sind vor allem alle Arten von PCM-und Datenleitungen zu verstehen. Die Erfindung betrifft weiter eine Anordnung zur Ausführung des genannten Verfahrens.

Aus der Schrift CH 541 910 ist ein Verfahren zur selektiven Einschaltung von Überbrückungen zwischen den Überbrückungskanälen in mit Regeneratoren versehenen Zwischenstellen einer mit Pulscodemodulation und bipolarer Übertragung arbeitenden Zeitmulitplex-Übertragungen bekannt. Dieses Verfahren dient zur Überprüfung der Funktionsfähigkeit einer bestimmten Sorte von digitalen Übertragungsleitungen und zur gezielten Fehlerortung im Falle eines Fehlers.

Das Verfahren arbeitet mit gezielt eingesetzten Verletzungen des Übertragungscodes, die von jeder Zwischenstelle erkannt werden und eine Schlaufung des Hin-und Rückkanals in jeder gewünschten Zwischenstelle bewirken. Auf Grund der Schlaufung ist es nicht möglich, das Verfahren während des normalen Betriebes durchzuführen. Vielmehr ist es dazu notwendig, die zu prüfenden Übertragungsleitungen aus dem normalen Betrieb zu nehmen. Dies macht die Überwachung mühsam, wenn zahlreiche Übertragungsleitungen zu überwachen sind und/oder erschwert eine laufende, automatische Überwachung.

Es sind weiter Überwachungssysteme bekannt, z.B. aus der Schrift EP-B-0 044 556, bei denen jeder Regenerator die ihn passierenden Codeverletzungen feststellt und zahlenmässig festhält. Durch eine zentrale Überwachungsstelle lassen sich die so gewonnenen Angaben über Übertragungsfehler abfragen, zentral auswerten und zur Fehlerortung verwenden. Diese Überwachungssysteme sind relativ aufwendig und geben trotzdem nur bedingt einen zeitlich und räumlich gesamthaften Überblick über die Funktionsfähigkeit der zu überwachenden Übertragungsleitungen.

Die Aufgabe der Erfindung besteht daher darin, eine relativ einfache Vorrichtung zur Überwachung digitaler Übertragungsleitungen anzugeben, die ständig einen vollständigen Überblick über das zeitliche und räumliche Störverhalten vermittelt. Hierdurch soll es kurzfristig möglich werden, nicht nur länger andauernde Fehler zu erkennen und zu orten, sondern auch sporadisch auftretende Fehler.

Diese Aufgabe wird durch das Verfahren und die Anordnung zur Ausführung dieses Verfahrens entsprechend den Kennzeichen der unabhängigen Ansprüche gelöst. Die unabhängigen Ansprüche geben Ausgestaltungen der Erfindung an.

Im folgenden wird die Erfindung anhand von acht Figuren beispielsweise näher beschrieben. Es zeigen:

Fig. 1 -Übersichtsschema über eine Übertragungseinrichtung und die zugeordnete Überwachungsvorrichtung

Fig. 2 -Blockschaltbild eines Zwischenverstärkers

Fig. 3 -Blockschaltbild eines Sammlers

Fig. 4 -Aufbau eines Impulsrahmens

Fig. 5 - Blockschaltbild eines weiteren Sammlers

Fig. 6 -Aufbau eines Datenwortes

Fig. 7 -Tabelle für die Bedeutung der Bereiche A und B eines Datenwortes

Fig. 8 -Verfeinertes Blockschaltbild eines Zwischenverstärkers

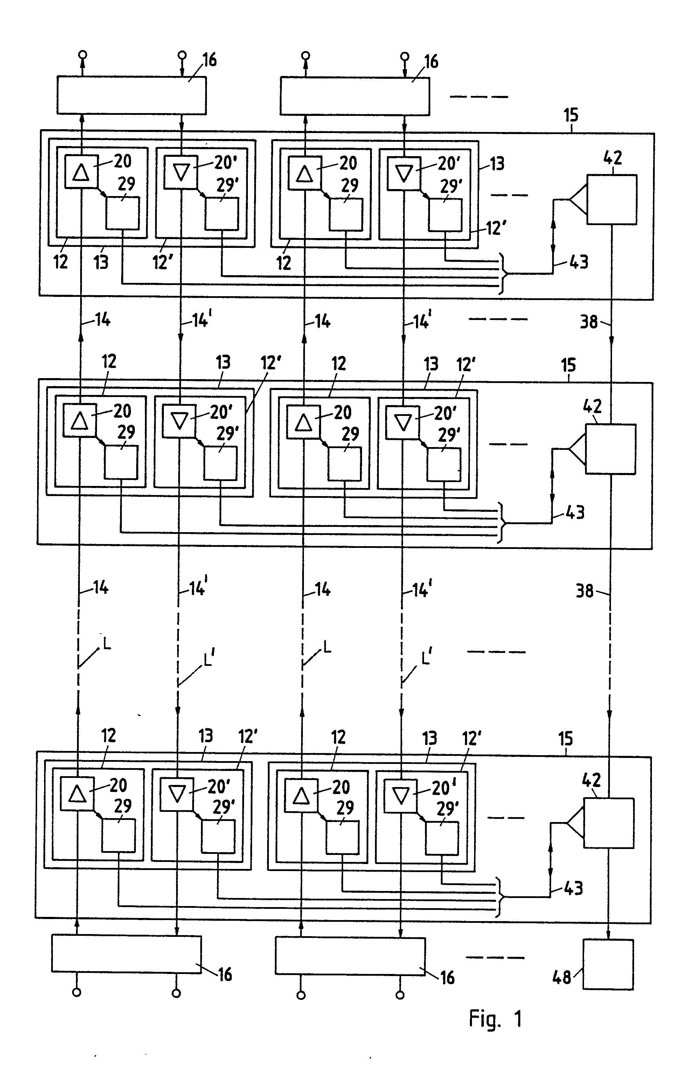

Fig. 1 zeigt eine Übertragungseinrichtung mit einer Mehrzahl parallel geführter digitaler Übertragungsleitungen L, L', z.B. PCM-oder Datenleitungen. Jede dieser Leitungen L, L' besteht aus mehreren Leitungsabschnitten 14 bzw. 14', die beidseitig durch jeweils eine Regeneratoreinheit 12 bzw. 12' begrenzt sind.

Sind die Übertragungsleitungen z.B. 2-Mbit/s-Datenleitungen, so werden für die Abschnitte 14, 14' üblicherweise symmetrische Aderpaare verwendet, die zu mehreren in einem einzigen Kabel vereinigt sind. Eine typische Länge der Abschnitte 14, 14' beträgt dann 1,8 km. Im allgemeinen sind jeweils zwei Übertragungsleitungen L und L' paarweise zu Duplexverbindungen zusammengefasst, was aus praktischen Gründen weiter zur paarweisen Zusammenfassung der zugeordneten Regeneratoreinheiten 12 und 12' zu jeweils einem Zwischenverstärker 13 führt.

Eine typische Zahl für die Anzahl 2-Mbit/s-Datenleitungen auf einem Kabel ist vierundsechzig. Die Leitungsabschnitte 14 dieser Datenleitungen erfordern jeweils vierundsechzig Regeneratoreinheiten 12 bzw. 12', die zu zweiunddreissig Zwischenverstärkern 13 zusammengefasst sind und räumlich vereinigt den wesentlichen Teil einer Zwischenstelle 15 bilden. Die Zahl der in einer Leitung L, L' benötigten Zwischenverstärkern 13 hängt von der Länge der Leitung ab, wobei eine weitere typische Zahl vierundzwanzig im allgemeinen nicht überschritten wird. Somit umfasst eine Übertragungseinrichtung der beschriebenen Art beispielsweise 24 × 32 (Duplexleitungen) = 768 Zwischenverstärker 13 mit jeweils zwei Regeneratoreinheiten 12, 12' und weist eine Länge von bis zu 40 km und mehr auf.

In den Endstellen der Leitungen L, L' sind die Regeneratoreinheiten 12 und 12' mit elektronischen Einrichtungen 16 verbunden, deren Aufbau hier nicht interessiert. Diese elektronischen Einrichtungen 16 wiederum sind durch genau definierte, im allgemeinen international genormte und in Fig. 1 durch Kreise dargestellte Schnittstellen an weitere, nicht gezeigte Einrichtungen angeschlossen.

Zur Überwachung einer solchen bekannten, umfangreichen Übertragungseinrichtung dient eine zwangsläufig ebenfalls räumlich ausgedehnte, im folgenden zu beschreibende Überwachungsvorrichtung.

Jede Regeneratoreinheit 12 bzw. 12' weist neben einem Regenerator 20 bzw. 20' für die Entzerrung und Regenerierung der ununterbrochen ankommenden und abgehenden Bits der Übertragungsleitungsabschnitte 14, 14' einen Fehlerüberwacher 29 bzw. 29' auf. Dieser ist mit dem Regenerator 20, 20' verbunden und spricht auf jede Codeverletzung des benützten Übertragungscodes, z.B. HDB3, an und speichert sie als Information. Damit bildet jede Codverletzung jeweils ein Fehlerereignis.

Jeder Fehlerüberwacher 29, 29' ist in seiner Zwischenstelle 15 über einen Anschluss 43 mit einem Sammler 42 verbunden. Diese Sammler 42 sind über eine gerichtete Leitung 38, z.B. eine im Vergleich zu den digitalen Übertragungsleitungen 14 langsame Datenleitung, seriell verbunden. In der einen Endstelle ist weiter ein Auswerter 48 als abschliessende Einheit an das Ende dieser Leitung 38 angeschlossen.

Die Überwachungsvorrichtung umfasst insgesamt die Gesamtheit aller Fehlerüberwacher 29, 29' und Sammler 42, die Verbindungen 43 zwischen diesen, die gerichtete Leitung 38 und den Auswerter 48.

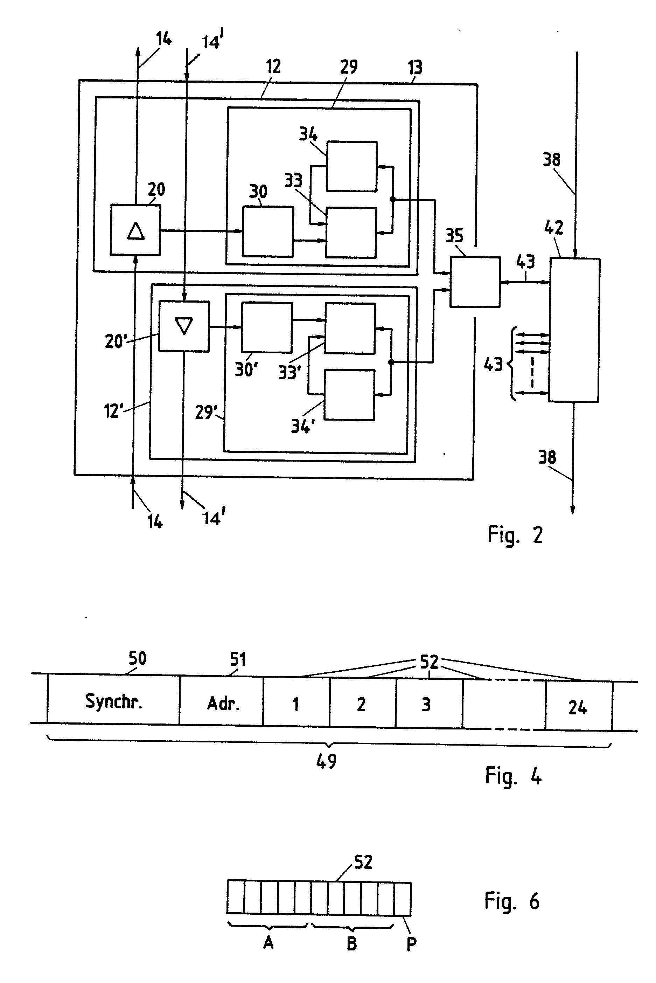

Fig. 2 zeigt ein Blockschaltbild eines Zwischenverstärkers 13. Dieser um fasst wie beschrieben zwei Regeneratoren 20, 20', die beidseitig mit Über tragungsleitungsabschnitten 14, bzw. 14' verbunden sind. Jeder Regenerator 20, 20' ist weiter mit dem zugeordneten Fehlerüberwacher 29, 29' verbunden. Diese umfassen Fehlerdetektoren 30, 30', die auf die jeweiligen, genannten Codefehler ansprechen und beispielsweise aus der genannten Schrift CH 541 910 bekannt sind. Beiden Fehlerdetektoren 30, 30' nachgeschaltet sind Speicher 33, 33', die die festgestellten Fehler registrieren. Im einfachsten Fall handelt es sich dabei um Dualzähler zum Aufsummieren der Anzahl Fehler.

Zu den Fehlerüberwachern 29, 29' gehören - schliesslich noch Ausleseschaltungen 34 und 34', mit deren Hilfe die Speicher 33, 33' ausgelesen und rückgestellt werden können.

Die Fehlerüberwacher 29, 29' sind über einen Trenner 35 mit dem Sammler 42 der jeweiligen Zwischenstelle verbunden. Dieser Trenner 35 dient zur Potentialtrennung zwischen dem Sammler 42 und den Regeneratoreinheiten 12, 12' und ist beispielsweise als Optokoppler oder bevorzugt als Impulstransformator ausgebildet. Die Potentialtrennung ist besonders bei Fernspeisung der Zwischenverstärker 13 zur Eliminierung des Einflusses der uneinheitlichen Potentiale notwendig.

Wie in Fig. 1 bereits gezeigt, ist der Sammler 42 mit einem ankommenden und einem abgehenden Leitungsabschnitt 38 sowie mit sämtlichen Zwischenverstärkern 13 der jeweiligen Zwischenstelle 15 verbunden, was in Fig. 2 durch die offenen Anschlüsse 43 angedeutet ist.

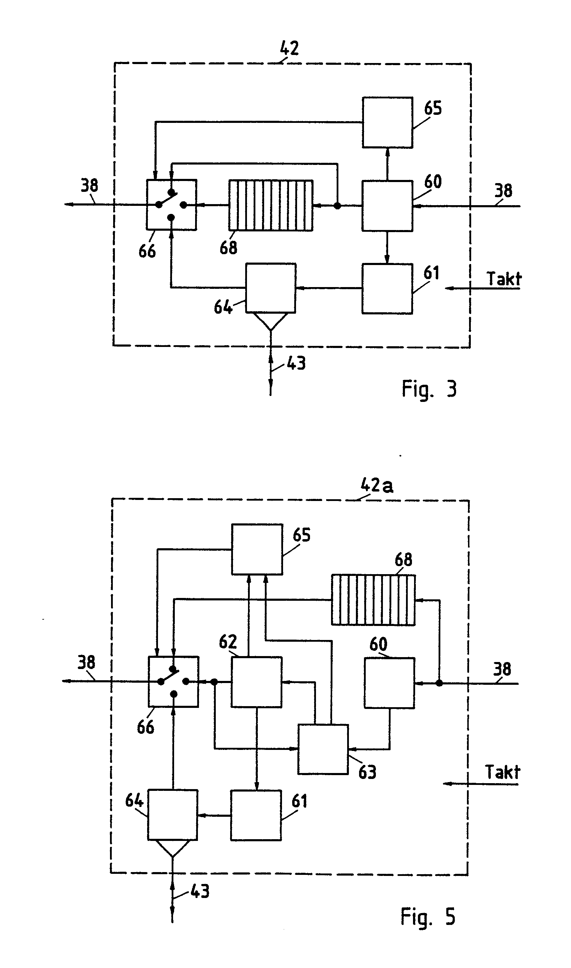

Fig. 3 zeigt das Blockschaltbild eines Sammlers 42. Dieser umfasst eine Erkennungsschaltung 60 zum Erkennen der über die gerichtete Leitung 38 ankommenden Signale bzw. der noch zu besprechenden Rahmen 49, eine Verzögerungseinheit 68 zum Verzögern der ankommenden Signale, eine durch eine Schaltsteuerung 65 gesteuerte Schaltlogik 66, eine Anwählsteuerung 61 und eine Abfrageeinheit 64.

Der Sammler 42 arbeitet im Takt der gerichteten Leitung 38, was durch den Pfeil "Takt" symbolisiert ist. Die Schaltlogik 66 entspricht einem dreipoligen Wechselschalter und ist entsprechend dargestellt. Die Abfrageeinheit 64 ist über die diversen Anschlüsse 43 mit den in Fig. 3 nicht dargestellten Zwischenverstärkern 13 verbunden.

Die bis hierhin beschriebene Überwachungsvorrichtung arbeitet wie folgt: Die Fehlerdetektoren 30, 30' überwachen in jedem Zwischenverstärker 13 ununterbrochen den Bitstrom auf den Leitungsabschnitten 14 bzw. 14'. Bei jeder Codeverletzung sprechen sie an und schreiben eine Fehlermeldung in den zugeordneten Speicher 33 bzw. 33' ein. Im Falle eines Dualzählers bedeutet dies die Fortschaltung des jeweiligen Zählers um 1.

Der vom Auswerter 48 am weitesten entfernte Sammler 42 sendet, ebenfalls ununterbrochen, einen fortlaufenden Bitstrom mit einer Wort-und Rahmenstruktur aus. Die in Fig. 4 gezeigten Rahmen 49 beginnen mit einem Synchronisationswort 50, dem ein Adresswort 51 zur Kennzeichnung jeweils eines Übertragungsleitungspaares 14, 14' folgt. Diesen beiden Worten 50, 51 folgt eine Anzahl gleicher Datenworte 52, wobei die Anzahl grösser oder gleich der maximalen Anzahl von Regeneratoreinheiten 12 einer Übertragungsleitung L, L' ist, also entsprechend der weiter oben genannten typischen Zahl beispielsweise vierundzwanzig. An das letzte Datenwort 52 schliesst unmittelbar der nächste Rahmen 49 an. Der Inhalt der Datenworte 52 kennzeichnet diese vorerst als leer, d.h. als Leerwort.

Die Rahmen 49 durchlaufen sukzessive alle Sammler 42 und die dazwischen liegenden Abschnitte der gerichteten Leitungen 38 und gelangen schliesslich zum Auswerter 48.

In jedem Sammler 42 erkennt die Ansprechschaltung 60 bei jedem ankommenden Rahmen 49 das Synchronisations-50 und das Adresswort 51. Die Anwählsteuerung 61 wählt hierauf den der jeweiligen Adresse entsprechenden Zwischenverstärker 13 der jeweiligen Zwischenstelle 15 an, und zwar über die Abfrageeinheit 64, die den jeweils zugeordneten der Anschlüsse 43 aktiv - schaltet. Über diesen Anschluss werden daraufhin im Takt der Leitung 38 Abfrageimpulse zum angwählten Zwischenverstärker 13 ausgesandt. Diese Impulse erreichen über den Trenner 35 die Lesesteuerungen 34 und 34', die hierauf die Speicher 33 und 33' bitweise auslesen. Die ausgelesenen Bits erreichen, in umgekehrter Richtung über den Trenner 35 und den genannten jeweiligen Anschluss 43, die Abfrageeinheit 64, die sie über die Schaltlogik 66 auf die abgehende Leitung 38 aussendet.

Die ankommenden Rahmen 49 laufen in jedem Sammler 42 nach dem Durchlaufen der Erkennungsschaltung 60 über die Verzögerungseinheit 68 und parallel dazu über eine direkte Verbindung zur Schaltlogik 66. Durch geeignete Umschaltung der Schaltlogik 66 mit Hilfe der Schaltsteuerung 65 erreichen das Synchronisations-50 und das Adresswort 51 jedes Rahmens 49 die abgehende Leitung 38 unverzögert, die Datenworte 52 jedoch verzögert, und zwar um die Länge eines Datenwortes. Hierdurch entsteht eine Lücke im Bitstrom, in welche die vom jeweils angewählten Zwischenverstärker 13 ausgelesenen Bits als neu gebildetes Datenwort einlaufen. Eine derartige Methode der Worteinfügung - (buffer insertion) ist grundsätzlich bekannt, beispielsweise aus der Schrift CH 550 521.

Sobald das letzte Datenwort 52 des jeweiligen Rahmens 49 vollständig in der Verzögerungseinheit 68 enthalten ist, hat bereits das Synchronisationswort 50 des nächsten Rahmens 49 den nämlichen Sammler 42 erreicht und wird erkannt. Hierdurch wird die Schaltlogik 66 in ihre ursprüngliche Schaltstellung zurückgestellt, was die Vernichtung des letzten, inzwischen überzähligen leeren Datenwortes 52 des bisherigen Rahmens 49 bedeutet. Die Länge der Rahmen 49 bzw. die Anzahl der Datenworte 52 bleibt auf diese Weise konstant. Die Rahmen 49 füllen sich auf die beschriebene Weise beim sukzessiven Durchlaufen aller Sammler 42 wortweise von vorne nach hinten mit Abfrageinformation. Hat die Übertragungsleitung L, L' weniger Zwischenverstärker 13 als die Rahmen 49 Datenworte 52, dann bleiben die letzten Datenworte 52 unverändert und damit als Leerworte erkennbar.

Jeder Rahmen 49 enthält bei seiner Ankunft im Auswerter 48 die Abfrageinformation aller Zwischenverstärker 13 mit der gleichen Adresse, d.h. zweier gepaarter Übertragungsleitungen L, L' bzw. einer Duplexleitung. Werden die Adressen der aufeinanderfolgenden Rahmen 49 zyklisch verändert, so werden nacheinander alle Übertragungsleitungen L, L' abgefragt. Als Abfragetakt wird günstig 1 Sekunde gewählt, da die Sekunde als kleinste Zeiteinheit für Überwachungszwecke besondere Bedeutung geniesst.

Die im Auswerter 48 ankommende Abfrageinformation wird ständig analysiert und geeignet ausgewertet, gespeichert und/oder angezeigt. Die Strategien hierfür sind nicht Gegenstand der Erfindung.

Fällt der vom Auswerter 48 am weitesten entfernte Sammler 42 oder ein sonstiger Sammler 42 aus, z.B. wegen Versagens eines elektrischen Bauelements, dann fällt hierdurch u.U. die gesamte bis hierher beschriebene Überwachungseinrichtung aus, was untragbar ist. Anhand von Fig. 5 wird daher ein weiterer Sammler 42a beschrieben, der dieses Problem überwindet.

Dieser weitere Sammler 42a besitzt wie der Sammler 42 nach Fig. 3 eine Erkennungsschaltung 60, eine Anwählsteuerung 61, eine Abfrageeinheit 64, eine Schaltsteuerung 65, eine Schaltlogik 66 und eine Verzögerungseinheit 68. Weiter besitzt er einen Rahmen-und Adressengenerator 62 und einen Vergleicher 63. Der Sammler 42a erzeugt im Takt der gerichteten Leitung 38 mit Hilfe des Rahmen-und Adressengenerators 62 ständig einen Bit-und Rahmentakt entsprechend Fig. 4. Er sendet weiter bei der über die Schaltsteuerung 65 in die mittlere Schaltstellung gebrachten Schaltlogik 66 für jeden Rahmen 49 das Synchronisations-50 und das Adresswort 51 auf die abgehende Leitung 38 aus. Sodann veranlasst er über die Anwählsteuerung 61 und die Schaltsteuerung 65 die Anwahl des in der ausgesendeten Adresse bezeichneten Anschlusses 43, die Abfrage der Speicher 33, 33' des angewählten Zwischenverstärkers 13 und das Auslesen des hierdurch gebildeten Datenwortes 52 auf die abgehende Leitung 38.

Im Synchronismus mit dem ausgesandten, ersten Rahmen 49 läuft von der ankommenden Leitung 38 ein ankommender, zweiter Rahmen 49 in den Sammler 42' ein. Dieser zweite Rahmen 49 wird in der Erkennungsschaltung 60 analysiert und parallel dazu in der Verzögerungseinheit 68 verzögert. Stellt der Vergleicher 63 hierbei fest, dass das durch den Rahmen-und Adressengenerator 62 erzeugte Synchronisations-50 und Adresswort 51 des ersten Rahmens mit dem analysierten Synchronisations-und Adresswort des zweiten Rahmens 49 übereinstimmt, so werden mittels der Schaltsteuerung 65 die über die Verzögerungseinheit 68 verzögerten Datenworte 52 des zweiten Rahmens 49 direkt anschliessend an die bereits ausgesendeten Worte 50 und 51 des ersten Rahmens 49 auf die abgehende Leitung 38 ausgesendet. Besteht dagegen keine Übereinstimmung, dann sendet der Rahmen-und Adressgenerator 62 seinen vollständigen ersten Rahmen auf die abgehende Leitung 38 aus, wobei der Inhalt der Datenworte 52 die fehlende Rahmenübereinstimmung kennzeichnet. Auf diese Weise bildet jeder Sammler 42a einen Rahmen-Regenerator, der bei Ausfall der ankommenden Rahmen automatisch zum Rahmen-Generator wird. Hierdurch wird stets wenigstens eine Teilüberwachung der Übertragungsleitungen 14 aufrechterhalten und die Überwachungsstelle 48 erhält Information darüber, wo der Ort mit fehlender Rahmen-Übereinstimmung liegt. Damit ist eine mit Sammlern 42a ausgerüstete Überwachungseinrichtung im Gegensatz zu einer mit Sammlern 42 selbstüberwachend.

Der Synchronismus zwischen der Erzeugung der ersten Rahmen durch den Rahmen-und Adressgenerator 62 und den über die Leitung 38 ankommenden zweiten Rahmen wird über eine nicht gezeigte, an sich bekannte Synchronisiereinrichtung vorgenommen, die auch den Takt erzeugt, wenn auf der ankommenden Leitung der Takt ausfällt.

Das Einfügen der von den Speichern 33, 33' des jeweils angewählten Zwischenverstärkers 13 ausgelesenen Bits als Datenwort in den jeweiligen Rahmen 49 kann in Variation zum Beschriebenen dadurch erfolgen, dass die Bits entweder entsprechend einer starren Festlegung in ein jeweils vorbestimmtes Datenwort 52 des jeweiligen Rahmens 49 eingelesen oder am Ende des jeweiligen Rahmens 49 angehängt werden. Im letzteren Fall müssen jeweils das Synchronisationswort 50, das Adresswort 51 und das erste ankommende Datenwort 52 um die Länge eines Datenwortes 52 verzögert, dieses verzögerte Datenwort 52 vernichtet und die nachfolgenden Datenworte 52 unverzögert an die Worte 50 und 51 angehängt werden.

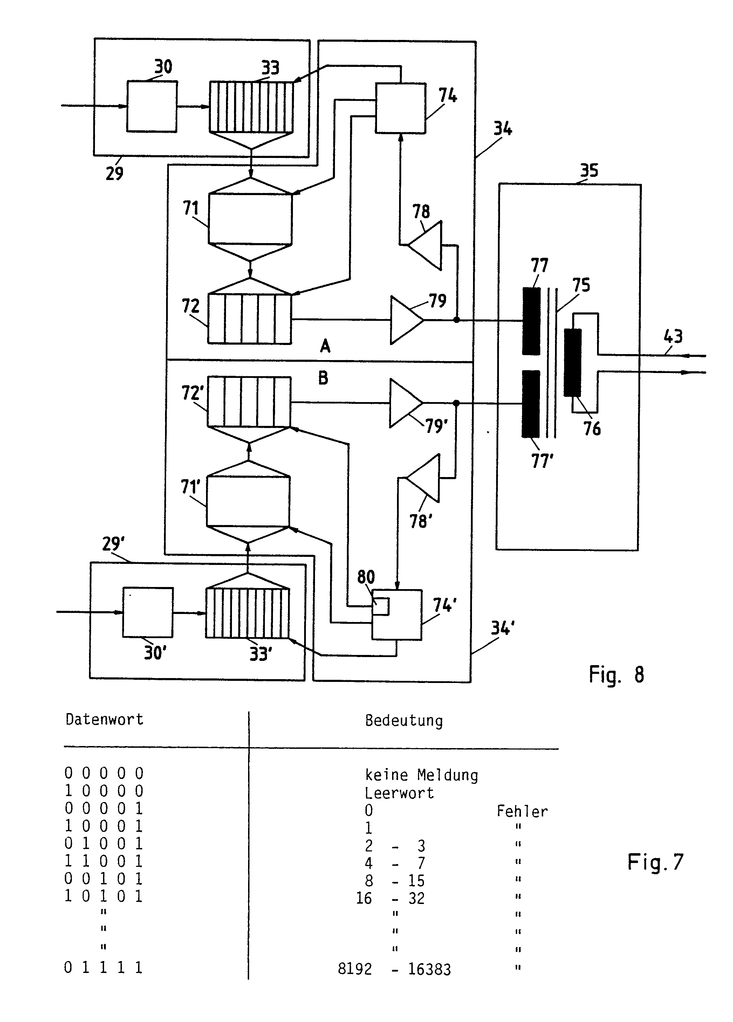

Fig. 6 zeigt den Aufbau eines Datenwortes 52. Danach ist jedes Datenwort dreigeteilt in zwei Bereiche A und B für die Bits bzw. für die Information aus den jeweils zugeordneten Speichern 33 bzw.

33' eines Zwischenverstärkers 13 und in ein Paritätsbit P. Die Bereiche A und B umfassen beispielsweise je fünf Bit, so dass ein Datenwort 52 dann insgesamt elf Bit umfasst.

Fig. 7 zeigt eine Tabelle für die Bedeutung der jeweils fünf Bit der Bereiche A oder B. Fünf Nullen entsprechend der obersten Zeile der Tabelle bedeuten, dass vom angewählten Zwischenverstärker 13 keine Rückmeldung erfolgt ist. Dies lässt z.B. auf den Ausfall der zugeordneten Speisung -schliessen. Die Kombination 10000 bedeutet Leerwort und wird bei der Erzeugung des Rahmens 49 in alle Datenworte 52 eingeschrieben.

Von diesen beiden und eventuell weiteren Kombinationen durch das letzte Bit, eine 1, unterschieden sind alle anderen Kombinationen. Deren vier vorangehende Bit bedeuten als Dualzahl gelesen den dezimalen Exponent des signifikantesten Bits des dualen Zählwertes in einem als Dualzähler ausgebildeten Speicher 33, 33'. Ist dieser Dualzähler 15-stellig, dann lassen sich mit den genannten vier Bit die in der Tabelle in der rechten Spalte angegebenen dezimalen Zählwerte übertragen. Hierbei ist es klar, dass auf Grund der Datenreduktion auf das signifikanteste Bit des jeweiligen Zählwertes nur im Fall des Zählwertes 0 oder 1 der richtige Wert und sonst jeweils ein um den Faktor 2 variabler Zahlenbereich übertragen und angezeigt werden kann. Dies ist jedoch ausreichend, da es zur Beurteilung einer Fehlersituation nicht auf die absoluten, sondern nur auf die grössenordnungsmässig richtigen Fehlerzahlen ankommt.

Fig. 8 zeigt ein detaillierteres Ausführungsbeispiel für die Fehlerüberwacher 29, 29', die zugeordneten Ausleseschaltungen 34 und 34' und den Trenner 35. Die Fehlerüberwacher 29, 29' umfassen die Fehlerdetektoren 30 bzw. 30', die bereits im Zusammenhang mit Fig. 2 besprochen worden sind, und diesen nachgeschaltete Dualzähler als Speicher 33 bzw. 33'. Die Dualzähler sind z.b. 15-stellig, entsprechend der Beschreibung zu Fig. 7.

Die Ausleseschaltungen 34 bzw. 34' umfassen für jeden Speicher 33 bzw. 33' einen Signifikanzkodierer 71, 71', der vom zugeordneten Speicher 33, 33' den jeweiligen Zählwert parallel übernimmt und anschliessend jeweils ein 5-Bit-Wort A bzw. B ausgibt, das angibt, in welcher Zählstufe des Dualzählers das signifikanteste Bit des jeweiligen Zählwertes stand. Diese 5-Bit-Worte A bzw. B werden von 5-Bit-Schieberegistern 72, 72' parallel übernommen. Ausgelöst werden diese Vorgänge über die gerichteten Impulsverstärker 78, 78' sowie durch die Lesesteuerungen 74, 74', die periodisch, z.B. jede Sekunde, die Zähler 33, 33' stoppen, das Auslesen und Rückstellen der Zähler veranlassen und anschliessend die Zähler wieder einschalten, die weiter das Codieren des signifikantesten Bits veranlassen, die Übernahme der Worte A bzw. B in die Schieberegister 72, 72' und schliesslich das serielle Auslesen dieser Schieberegister über die gerichteten Impulsverstärker 79 bzw. 79' bewirken.

Der Trenner 35 ist im gezeigten Beispiel ein Impulstransformator 75 mit einer Primärwicklung 76 und zwei Sekundärwicklungen 77, 77'. Die Primärwicklung 76 ist über den als Zweidrahtleitung ausgebildeten Anschluss 43 mit dem nicht gezeigten, zugeordneten Sammler 42 verbunden. Die Sekundärwicklungen 77, 77' bewirken die galvanische Trennung der zugeordneten Schaltungen untereinander und gegenüber dem Anschluss 43, wobei Spannungsfestigkeiten bis über 1000 V notwendig sein können.

Die Einrichtung entsprechend Fig. 8 arbeitet wie folgt: Der nicht gezeigte Sammler 42 sendet im Synchronismus mit dem jeweiligen Rahmen 49 und im Bittakt des Rahmens kurze Abfrageimpulse auf den Anschluss 43 aus. Diese Abfrageimpulse durchlaufen den Transformator 75 und erreichen über die Verstärker 78, 78' die Lesesteuerungen 74, 74'. In diesen Steuerungen löst der jeweils erste Impuls einer Impulserie Signale aus, die die Zähler 33, 33' stoppen und die Übertragung der gesammelten Information in die Schieberegister 72 bzw. 72' veranlassen. Die jeweils zweiten bis sechsten Impulse bewirken das schrittweise Auslesen des Schieberegisters 72, indem über den Verstärker 79 bei logisch 1 jeweils ein Impuls, sozusagen als Antwort auf den jeweiligen Abfrageimpuls, auf den Anschluss 43 ausgesandt wird und bei logisch 0 kein Impuls. Im Sammler 42 werden diese Antwortimpulse als Bereich A eines Datenwortes 52 registriert und in den Rahmen 49 eingefügt. Die jeweils siebten bis elften Abfrageimpulse bewirken entsprechend das schrittweise Auslesen des Schieberegisters 72', d.h. des Bereichs B des genannten Datenwortes 52. Im Sammler 42 oder möglicherweise in der Ausleseschaltung 34 wird anschliessend an das Auslesen der Bereiche A und B das zugeordnete Paritätsbit P beigefügt.

Die über den Anschluss 43 ankommenden Abfrageimpulse erreichen jeweils beide Lesesteuerungen 74 und 74'. Die letztere (74') besitzt eine Verzögerung 80, die verhindert, dass die jeweils zweiten bis sechsten Impulse das Schieberegister 72' auslesen. Eine entsprechende Einrichtung ist in der Lesesteuerung 74 nicht erforderlich, da die jeweils siebten bis elften Impulse auf das bereits ausgelesene und damit leere Schieberegister 72 wirken, wobei über den Verstärker 79 keine Impulse abgegeben werden.

Entsprechend der bisherigen Beschreibung erfolgt die Verbindung der Sammler 42 mit den Zwischenverstärkern 13 der jeweiligen Zwischenstelle 15 durch je einen Anschluss 43. Die Abfrageeinheit 64 jedes Sammlers 42 wählt entsprechend der jeweils gelesenen Adresse den jeweiligen Anschluss 43 an und sendet auf ihn die jeweiligen Anfrageimpulse aus und empfängt über ihn die Antwort. Eine Variante hierzu ist eine Busleitung, die alle Zwischenverstärker 13 gemeinsam verbindet und über die alle Zwischenverstärker mit Hilfe adressierter Abfrageimpulse abgefragt werden.

Die Einheiten des Sammlers 42 bzw. 42', insbesondere die Anwählsteuerung 61 und die Abfrageeinheit 64, können entweder als festverdrahtete Logik oder als programmgesteuerter Mikroprozessor aufgebaut sein. Desgleichen können die Logikeinheiten der Zwischenverstärker 13, 13', insbesondere die Speicher 33, 33' und die Ausleseschaltungen 34, 34', unter Verwendung von Mikroprozessoren aufgebaut sein.

Als Übertragungscode auf der gerichteten Leitung 38 empfiehlt sich ein selbsttaktierender Code, z.B. der Manchester-oder der CMI-Code (coded mark inversion). Als Abfragetakt für die Zählwerte in den Speichern 33, 33' der Zwischenstellen wird, wie bereits gesagt, vorteilhaft 1 Sekunde gewählt. Bei zweiunddreissig parallelen Duplexleitungen, jeweils vier-undzwanzig Zwischenstellen 15 pro Leitung und Datenwörtern 52 von jeweils elf Bit ergibt sich in diesem Fall ein Bittakt von etwa 10 kBit/s auf der gerichteten Leitung 38.

Aus praktischen Gründen sind wie beschrieben in einem Zwischenverstärker 13 die zwei für die jeweilige Hin-und Rückleitung 14 erforderlichen Regeneratoreinheiten 12 und 12' vereinigt und werden durch eine gemeinsame Adresse der Rahmen 49 angewählt. Als Varianten hierzu sind die Zuteilung von individuellen Adressen für jede der Regeneratoreinheit 12, 12' oder die Zusammenfassung mehrerer Zwischenverstärker 13 unter einer Adresse möglich. In einem solchen Fall erfährt selbstverständlich auch der Rahmen 49 eine entsprechende Modifizierung.

Das beschriebene Verfahren zur Überwachung von Übertragungsleitungen hat die wesenliche Eigenschaft, das es während des laufenden Betriebes der zu überwachenden digitalen Übertragungsleitungen L, L' arbeitet und einen gesamthaften zeitlichen und räumlichen Überblick ergibt. Damit lassen sich nicht nur permanente Fehler feststellen, sondern auch vereinzelte oder sporadisch auftretende Fehler. Weiter ist es mit dem Verfahren möglich, die Funktionsfähigkeit der Übertragungsanlage zu testen und vorsorgliche Wartung zu betreiben. Hierzu werden einzelne der Übertragungsleitungen L, L' aus dem normalen Betrieb genommen und mit einem Sender verbunden, der einstellbare Bitmuster erzeugt und aussendet. Diese Bitmuster weisen eine ungleiche und einstellbare Anzahl positiver und negativer Impulse auf - (sog. Disparitäten). Diese Muster beeinträchtigen die Regenerierungseigenschaften der Regeneratoren 20, 20' und verletzen auch die Codierungsregeln. Solange die Regeneratoren fehlerfrei arbeiten, tritt in den Fehlerüberwachern 29 daher eine genau bekannte Anzahl Fehler pro Sekunde (Fehlerrate) auf. Bei Abweichungen der abgelesenen Fehlerraten von den erwarteten Fehlerraten kann daher auf abweichende Übertragungs-und/oder Regenerierungseigenschaften bzw. auf den vorhandenen Störabstand der Zwischenverstärker 13 geschlossen werden. Dies erlaubt z.B. auch - schleichende Verschlechterungen der jeweiligen Leitung 14 zu erkennen und zu beobachten. Somit besteht die Möglichkeit, Reparaturmassnahmen zu ergreifen, bevor ein Ausfall einer Leitung 14 erfolgt ist. Bei Einspeisung hoher Codefehlerraten können Speicher bzw. Dualzähler 33, 33' mit fünfzehn Stellen nicht ausreichend sein. Es empfiehlt sich daher für diesen Fall die Zählerkapazität zu erweitern, beispielsweise auf neunzehn Stellen, was allerdings dann ebenfalls eine Modifizierung des Ausleseverfahrens bzw. der Bedeutung der aus dem Speicherinhalt abgeleiteten Bereiche A, B des Datenwortes 52 bedingt.

Verlaufen die zu überwachenden Leitungen 14 nicht entsprechend Fig. 1 auf dem ganzen Übertragungsweg parallel, sondern treten eine oder mehrere Verzweigungen auf, dann ist folgende Ergänzung notwendig. Jeder Verzweigung wird, unabhängig davon wieviel Leitungen die Verzweigung umfasst, eine zugeordnete gerichtete Leitung 38″ zugeteilt mit Sammlern 42″ in dem jeweiligen Zwischenstellen 15″. Diese Einrichtung arbeitet wie die anhand von Fig. 1 bis 3 beschriebene. An den eigenlichen Verzweigungsstellen, d.h. an nur durch ihre örtliche Lage ausgezeichneten Zwischenstellen 15, befinden sich spezielle Sammler. Diese sammeln in einem Pufferspeicher die mit unabhängigen Takt jeweils von der Verzweigung ankommenden Datenworte 52, d.h. die Information aus den zugeordneten Speichern 33, 33', und fügen diese Information in den jeweils nächstfolgenden Rahmen 49 des Hauptstranges ein unter Überschreibung oder Vernichtung einer der Information entsprechenden Anzahl von Leerworten. Auf diese Weise gelangt die Abfrageinformation der Verzweigungen gleich der des Hauptstranges zur Überwachungsstelle 48 und kann dort ausgewertet werden.

## Ansprüche

1. Verfahren zur Überwachung einer Mehrzahl von digitalen Übertragungsleitungen (L,L'), die sich zwischen zwei Endstellen erstrecken, auf Fehler,
-wobei jede dieser Leitungen (L,L') sich aus einer Mehrzahl von beidseitig durch Regeneratoreinheiten (12, 12') begrenzten Leitungsabschnitten - (14,14') zusammensetzt,
-wobei räumlich zusammenliegende Regeneratoreinheiten (12, 12') in Zwischenstellen (15) zusammengefasst sind,
-wobei jede Regeneratoreinheit (12, 12') zumindest einen Regenerator (20, 20') zum Regenerieren der digitalen Übertragungssignale, einen Fehlerdetektor (30, 30'), einen Speicher (33, 33') für Fehlermeldungen und eine Ausleseschaltung (34, 34') aufweist, und
-wobei zugeordnet zur einen Endstelle eine Überwachungsstelle (48) vorgesehen ist, die die aus den Speichern (33, 33') ausgelesenen Fehlermeldungen empfängt und auswertet,
dadurch gekennzeichnet in der am weitesten von der Überwachungsstelle (48) entfernten, intakten Zwischenstelle (15), -dass ein Datentakt generiert wird,
-dass dem Datentakt ein Rahmen (49) aufgeprägt wird bestehend aus einem Synchronisierwort (50), einem Adresswort (51) und nachfolgenden Datenworten (52), die als leer gekennzeichnet sind und deren feste Anzahl grösser oder gleich der Anzahl von Regeneratoreinheiten (12, 12') pro Übertragungsleitung ist,
-dass in das jeweilige Adresswort (51) zyklisch eine Adresse eingeschrieben wird, die jeweils einer oder mehreren der zu überwachenden Übertragungsleitungen (L,L') zugeordnet ist, und
- dass die Rahmen (49) im Datenakt ununterbrochen über eine gerichtete Leitung (38) in Richtung zur Überwachungsstelle (48) ausgesendet werden, und dadurch gekennzeichnet in allen intakten Zwischenstellen (15),
-dass der ankommende Datentakt regeneriert wird,
-dass bei jedem Rahmen (49) das Synchronisier-- (50) und das Adresswort (51) gelesen wird,
-dass die Fehlermeldungen der Speicher (33, 33') der durch die jeweilige Adresse bezeichneten Regeneratoreinheiten (12, 12') abgefragt und an Stelle eines leeren Datenwortes (52) in den jeweiligen Rahmen (49) eingelesen werden, und
-dass der so veränderte, jeweilige Rahmen (49) über die gerichtete Leitung (38) zur jeweils nächsten Zwischenstelle (15) oder abschliessend zur Überwachungsstelle (48) ausgesendet wird.

2. Verfahren nach Anspruch 1,
dadurch gekennzeichnet,
dass die Fehlermeldungen der Speicher (33, 33') jeweils in ein der jeweiligen Zwischenstelle (15) fest zugeordnetes leeres Datenwort (52) eingelesen werden.

3. Verfahren nach Anspruch 1,
dadurch gekennzeichnet,
dass die Fehlermeldungen der Speicher (33, 33') jeweils als neugebildete Datenworte (52) in den jeweiligen Rahmen (49) eingeschoben und für jedes solche Datenwort ein leeres Datenwort vernichtet wird.

4. Verfahren nach Anspruch 3,
dadurch gekennzeichnet,
dass die neugebildeten Datenworte (52) jeweils nach dem Synchronisier-(52) und Adresswort (51) eingeschoben und das jeweils letzte leere Datenwort vernichtet wird.

5. Verfahren nach Anspruch 3,
dadurch gekennzeichnet,
dass die neugebildeten Datenworte (52) jeweils am Ende des Rahmens (49) eingeschoben und das jeweils erste leere Datenwort vernichtet wird.

6. Verfahren nach Anspruch 1,
dadurch gekennzeichnet,
dass aus den Fehlermeldungen von jeweils zwei Speichern (33, 33') ein Datenwort (52) gebildet wird, bestehend aus zwei gleichgrossen Bereichen (A, B) und einem diesen zugeordneten Paritätsbit (P) (Fig. 6).

7. Verfahren nach Anspruch 6,
dadurch gekennzeichnet,
-dass die Fehlermeldungen dual gezählt werden,
-und dass in die Bereiche (A, B) der Datenworte (52) jeweils der als Dualzahl geschriebene dezimale Exponent des signifikantesten Bits des jeweiligen Zählwertes eingeschrieben wird (Fig. 7).

8. Anordnung zur Ausführung des Verfahrens nach Anspruch 1,
dadurch gekennzeichnet,
-dass eine gerichtete Datenleitung (38) die Sammler (42) seriell verbindet und in der Überwachungsstelle (48) endet, und
-dass jeder Sammler (42) einer Zwischenstelle (15) zugeordnet ist und ausgebildet ist zur Verbindung der Fehlerüberwacher (29, 29') dieser Zwischenstelle (15) mit der Datenleitung (38).

9. Anordnung nach Anspruch 8,
dadurch gekennzeichnet,
-dass jeder Fehlerüberwacher (29, 29') einem Abschnitt (14) einer der digitalen Übertragungsleitungen (L,L') zugeordnet ist und einen Fehlerdetektor (30, 30'), einen Speicher (33, 33') und eine Ausleseschaltung (34, 34') umfasst,
-dass jeweils zwei Fehlerüberwacher (29, 29') paarweise einander zugeordnet sind,
-und dass die Fehlerüberwacher (29, 29') gegeneinander und gegen den zugeordneten Sammler (42) durch Trenner (35) galvanisch getrennt sind (Fig. 2).

10. Anordnung nach Anspruch 9,
dadurch gekennzeichnet,
-dass die Speicher (33, 33') Dualzähler sind, -dass die Ausleseschaltungen (34, 34') Signifikanzkodierer (71, 71') und Schieberegister (72, 72') umfassen,
-und dass der Trenner (35) ein Impulstransformator (75) mit drei Wicklungen (76, 77, 77') ist.

11. Anordnung nach Anspruch 8,
dadurch gekennzeichnet,
dass die Sammler (42) als Worteinfügeschaltung ausgebildet sind, die zumindest ein Schieberegister (68) der Länge eines Datenwortes (52), einen Dreiwegschalter (66) und eine Rahmenerkennungsschaltung (60) umfasst.

12. Anordnung nach Anspruch 11,
dadurch gekennzeichnet,
dass das Schieberegister (68) der Rahmenerkennungsschaltung (60) nachgeschaltet ist (Fig. 3).

13. Anordnung nach Anspruch 11,
dadurch gekennzeichnet,
-dass das Schieberegister (68) der Erkennungsschaltung (60) parallel geschaltet ist,
-dass ein Rahmen-und Adressengenerator (62) vorgesehen ist zur Erzeugung von Rahmen (49) synchron zu den über die gerichtete Datenleitung (38) ankommenden Rahmen (49),
-dass ein Vergleicher (63) vorgesehen ist zum Vergleich der jeweils auf die abgehende Datenleitung (38) ausgesendeten und der über die ankommende Datenleitung (38) ankommende Synchronisier-(50) und Adressworte (51) der Rahmen (49) (Fig. 5).

14. Anordnung nach Anspruch 8,
dadurch gekennzeichnet,
dass die Sammler (42) als Einheit ausgebildet sind, die je einen programmgesteuerten Mikroprozessor umfassen.

15. Verwendung des Verfahrens nach Anspruch 1 zur Feststellung des Störabstandes einer digitalen Übertragungsleitung mit ternärem Übertragungscode, insbesondere HDB3,
dadurch gekennzeichnet,
dass auf die jeweilige Leitung (14) ein Bitmuster mit vorgegebenem, von 1 abweichendem Verhältnis von positiven und negativen Bits mit der Übertragungsrate der Leitung ausgesendet wird,
und dass in jeder Zwischenstellen (15) die Anzahl Fehler über eine vorgegebene Dauer ermittelt wird.

Fig. 1

0 228 101

Fig. 2

Fig. 4

Fig. 6

42

65

38

60

38

66

68

Takt

64

43

Fig. 3

42a

65

68

38

62

60

38

66

63

Takt

64

61

43

Fig. 5

Fig. 8

| Datenwort | | | | | Bedeutung | | |
|---|---|---|---|---|---|---|---|
| 0 | 0 | 0 | 0 | 0 | keine Meldung | | |
| 1 | 0 | 0 | 0 | 0 | Leerwort | | |
| 0 | 0 | 0 | 0 | 1 | 0 | | Fehler |
| 1 | 0 | 0 | 0 | 1 | 1 | | " |
| 0 | 1 | 0 | 0 | 1 | 2 | – 3 | " |
| 1 | 1 | 0 | 0 | 1 | 4 | – 7 | " |
| 0 | 0 | 1 | 0 | 1 | 8 | – 15 | " |
| 1 | 0 | 1 | 0 | 1 | 16 | – 32 | " |
| | | " | | | | " | " |
| | | " | | | | " | " |
| | | " | | | | " | " |
| 0 | 1 | 1 | 1 | 1 | 8192 | – 16383 | " |

Fig. 7